Europäisches Patentamt

European Patent Office

Office européen des brevets

(11) Publication number: **0 138 352 B1**

# EUROPEAN PATENT SPECIFICATION

(45) Date of publication of patent specification: **19.06.91**  (51) Int. Cl.⁵: **G06F 9/42**, G06F 9/26

(21) Application number: **84305968.4**

(22) Date of filing: **31.08.84**

(54) Method of operating a data processing system via depictor-linked microcode and logic circuitry.

(30) Priority: **01.09.83 US 528461**

(43) Date of publication of application:
**24.04.85 Bulletin 85/17**

(45) Publication of the grant of the patent:
**19.06.91 Bulletin 91/25**

(84) Designated Contracting States:
**BE DE FR GB IT NL SE**

(56) References cited:
**EP-A- 0 010 184**

**ELECTRONIC DESIGN, vol. 29, no. 3, 5th February 1981, pages 123-127, Waseca, MN, Denville, NJ, US; D. LAFFITTE et al.: "Architecture eases software's migration into VLSI hardware"**

**ELECTRO/80 CONFERENCE RECORD, 13th-15th May 1980, vol. 5, pages 1-8, Boston, MA, US; C. McMINN et al.: "The intel 8087: A numeric data processor"**

**IEEE TRANSACTIONS ON COMPUTERS, vol. C-23, no. 8, August 1974, pages 783-791, New York, US; R.T. THOMAS: "Organization for execution of user microprograms from main**
memory: synthesis and analysis"

(73) Proprietor: **UNISYS CORPORATION
1, Burroughs Place
Detroit Michigan 48232(US)**

(72) Inventor: **Green, Howard Hunt
17147 West Bernardo Drive, 201
San Diego California 92127(US)**
Inventor: **Tomlinson, Christopher Jerome
1531 Elon Lane
Encinitas California 92024(US)**

(74) Representative: **Kirby, Harold Douglas Benson et al
G.F. Redfern & Company Marlborough Lodge
14 Farncombe Road
Worthing West Sussex BN11 2BT(GB)**

## Description

### BACKGROUND OF THE INVENTION

This invention relates to data processing systems; and in particular, it relates to methods of operating such systems.

Conventionally, a data processing system is operated by providing a program which consists of a sequence of instructions of some predetermined language. These instructions are executed one at a time; and the particular instruction that is currently being executed is pointed to by a program counter.

Each time the execution of an instruction is completed, the program counter is incremented to point to the next sequential instruction unless the completed instruction was a JUMP instruction or a CALL instruction. When a JUMP instruction is encountered, the program counter is loaded with a new address as the JUMP instruction directs; and then instructions are sequentially executed beginning at that new address. By comparison, when a CALL instruction is encountered, an independent procedure is executed and then control passes back to the instruction which follows the CALL instruction.

A procedure is a separate special purpose sequence of instruction from the same predetermined language of which the program that called it is made up. From the point of view of the calling program, a procedure can be regarded as a single new higher level instruction even though it may be quite complicated and made up of hundreds of instructions from the predetermined language.

By writing a collection of procedures, a programmer can define a new level instruction set. Then programs in the predetermined language can be written which use this new level instruction set by referring to them through the CALL instruction. Additional details on this prior art method of structuring or partitioning a program are found in the Prentice-Hall textbook entitled Structured Computer Organization by Andrew S. Tanenbaum, 1976, at pages 120-130.

One problem, however, with having a data processing system operate to execute a program which includes several CALL instructions and their corresponding procedures is that the system operates too slowly. This fact and the manner in which the execution speed can be greatly enhanced in accordance with the present invention is explained in detail in the following Detailed Description.

Still another problem with the prior art method of operating a data processing system by means of CALL instructions and corresponding procedures is that the operation is too inflexible. In particular, the operation is too confined to include special purpose microcode routines or special purpose hardware logic units that perform procedure-like functions.

This invention covers a method of operating a data processing system whereby any activity which is CALLed by a high level language program is selectively linked via a depictor to another program of the same high level language, or a low level language microcode program, or a special purpose hardware logic unit which performs that activity.

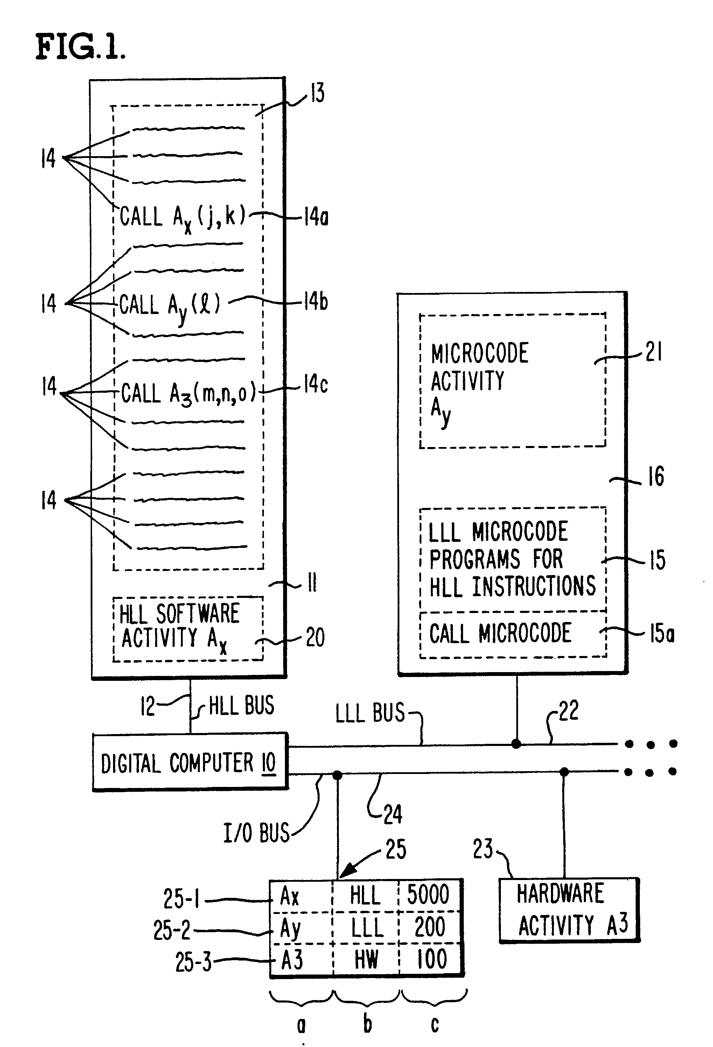

Figure 1 shows a high level language program 13 which contains three CALL instructions 14a, 14b, and 14c. Instruction 14a CALLs an activity $A_x$ which is performed by another program 20 of the same high level language; instruction 14b CALLs activity $A_y$ which is performed directly by a microcode program 21 (no high level language program is involved); and instruction 14c CALLs an activity $A_z$ which is performed directly by a hardware logic unit 23 (no high level language program and no microcode program is involved).

In order to determine whether a CALLed activity is implemented by high level language software, microcode, or hardware, respective depictors 25 are provided for each of the CALLed activities. In the preferred embodiment, a depictor is a content addressable memory (CAM) that contains a data word which is partitioned into three parts "a", "b", and "c". That is, a depictor is a hardware-data word combination. Part "a" of the data word identifies the CALLed activity, part "b" is a code which indi- cates how that activity is performed (i.e., by a high level language program, a microcode program, or a special purpose hardware logic unit) and part "c" provides a link to the means which performs the CALLed activity.

If the code in portion "b" of a depictor indicates that the activity of portion "a" is performed directly by a special purpose hardware logic unit, then portion "c" of the depictor provides the address of that hardware logic unit on an I/O bus 24. If the code in portion "b" of a depictor indicates that that activity of portion "a" is performed directly by a microcode program, then portion "c" of that depictor gives the starting address of that microcode in a microcode memory 16. And if the code in portion "b" of a depictor is a code which indicates that the activity of portion "a" is performed by a high level language program, then portion "c" gives the starting address of that program in memory 11.

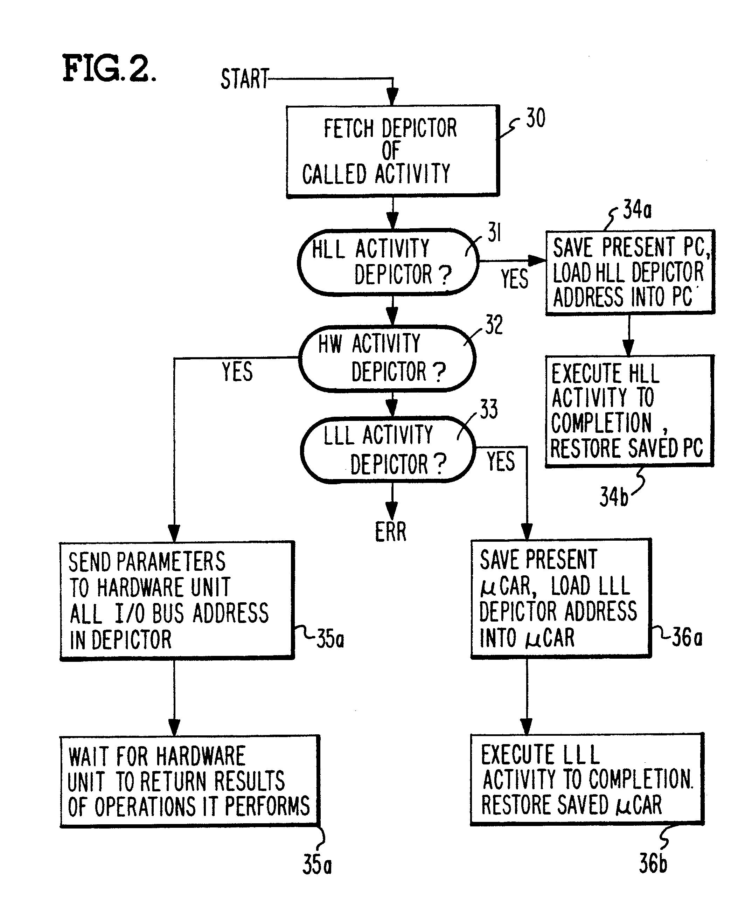

Each time a high level language instruction is encountered which CALLs an activity, a special microcode subroutine 15a is executed which reads the "b" and "c" fields in the depictor of the CALLed activity from the CAM 25, uses the "b" field to determine what means is utilized to perform that activity, and activates that means via the information that is provided in portion "c". These steps which microcode 15a performs are illustrated in detail in Figure 2.

By providing depictors which link CALLed activities to either high level language program, microcode programs, or hardware logic units, the flexibility of a data processing system is greatly increased. If a high level language program operates too slowly, it can be sped up by simply changing the "b" and "c" fields of the depictors for certain activities which the program CALLs and providing special microcode programs or special hardware logic units to perform those activities. No change in the high level language program itself is required. Also no change in hardware to the control portion of the computer which executes the high level language program is required; the microcode 15a which examines the depictors stays the same; and only the content of the depictors changes.

U.S. Patent 3,478,322 describes a digital computer, the preferred embodiment of which is illustrated in FIG. 1A. That embodiment includes a read only control store 3 and a pair of electronically changeable control stores 1 and 2. Each of these control stores holds micro-instructions, and the microinstructions in control stores 1 and 2 are received from a main store 36, an I/O device 42, or an external control program storage 7.

In operation, microinstructions are executed from any one of the control stores 1, 2, or 3. Which particular control store the microinstructions come from is selected by a circuit 22 in response to control signals that are generated on a line 220 by a control storage select module 4. Module 4 is shown in detail in FIG. 1C, and it is described in detail at column 4, line 73 - column 5, line 66.

Inspection of FIG. 1C shows that module 4 has four main components: 1) a control made register 200, 2) a control store status register 202, 3) a cycle allocation control 204, and 4) a control decode 206. Line 220, which carries the signals that select the microcode from one of the control stores 1, 2, or 3, comes from the control decode 206.

Column 5, lines 56-66 says that: register 200 defines the current mode of operation; register 202 records the current status of each store and indicates such conditions as whether a cycle is in progress or whether the desired ECCS is available or busy; control 204 responds to cycle request, analyzes current mode setting and status, and issues appropriate cycle information to control decoder 206; and decoder 206 utilizes the above information to generate control signals on line 220 and thereby select microcode from one of the control stores 1. 2. or 3.

But these FIG. 1A and FIG. 1C circuits do not teach or suggest the presently claimed invention. These circuits do not execute a high level language software program until a CALL instruction is encountered and they do not examine a depictor to determine whether the CALLed activity is performed by another program in that high level language or performed directly by microcode or performed directly by a hardware logic unit. Those circuits merely select microcode from three different memories; and they don't include any depictors, as previously defined, at all.

Paragraph 17d of the final rejection places reliance on column 7 lines 29-58 and the "control storage register means" and "switching and selection means" which are there recited. However, that control storage register means simply receives microcode from the multiple control stores (i.e., it is registers 9, 10, and 11 in FIG. 1A); and that switching and selection means simply transfers microcode from the main storage into one of the control stores (see column 7, lines 53-58). This has nothing to do with depictors and their use in linking called activities to high level language programs, microcode programs, and hardware.

The Siewiorek reference describes a stack mechanism in the Burroughs B6500/B7500 computers. Figure 1 shows the formats of the various types of words which are loaded into the stack. These words are 51 bits long, and their leftmost three bits form a tag which identifies the different word types. (See page 224, lefthand column, last paragraph).

Words which are used to locate high level language instructions are program descriptors (which have a tag of 101), program control words (which have a tag of 111), and indirect reference words (which have a tag of 001). Program descriptors have an address field which gives the absolute memory address of the first high level language instruction in a program that performs an activity. (See page 246, left column, lines 3-6.) Program descriptors are pointed to by the address couple field of either a program control word or indirect reference word. (See page 249, righthand column, last paragraph.)

By comparison, the presently claimed invention utilizes depictors which have a "b" field with three different codes that link a CALLed activity to either a high level language program, microcode program, or a hardware logic unit. This is totally different than the referenced stack mechanism in which the program descriptors, program control words, and indirect reference words only provide links to high level language instructions. Linking to just high level language instruction is too limited and too inflexible.

With regard to IEEE Transactions on Computers, January 1980, Vol. C-9, No. 1. the lefthand column of page 10 merely describes bit slicing as an architecture for a computer. Page 17, lefthand column, describes four possible approaches of "supporting" several high level languages on a machine. However, no depictor-like mechanisms are disclosed for implementing this "support"; and none of the approaches are described as enabling an activity to be selectively implemented by hardware, microcode, or high level language instructions. Page 17, righthand column, discusses the development and use of higher level languages such as micro-assemblers and compilers to generate microcode; but the generation of microcode through the use of such software tools is clearly not the subject of the claimed invention.

The invention as set forth in claim 1 relates to a method of operating a data processing system of a type that has a means in which there is stored one software program that contains first and second instructions which respectively call first and second activities; and a means for executing said activities.

The invention is characterized by the steps of: linking said first activity via one depictor having a first code to another software program that performs said first activity, and linking said second activity via another depictor having a second code to a non-software means that performs said second activity; executing said one software program until either said first or second instruction is encountered; sensing whether the activity called by said encountered instruction is linked to a depictor which has said first or second code; and executing said another software program if said sensing step detects said first code; and activating said non-software means if said sensing step detects said second code.

## BRIEF DESCRIPTION OF THE DRAWINGS

Various features and advantages of the invention are described in the following Detailed Description in conjunction with the accompanying drawings wherein:

Figure 1 illustrates one embodiment of a data processing system that is constructed according to the invention;

Figure 2 illustrates the steps that are there taken by the Figure 1 system when a CALL instruction is executed;

Figure 3 illustrates the details of the hardware components in the computer of the Figure 1 system that are affected by the steps of Figure 2;

Figure 4 illustrates another embodiment of a data processing system that is constructed according to the invention.

## DETAILED DESCRIPTION OF THE INVENTION

Referring now to Figure 1, a data processing system and method of operating the system in accordance with the invention will be described. Included in the Figure 1 system is a digital computer 10 which is coupled to a memory 11 via a bus 12. A software program 13 which computer 10 executes is stored in memory 11.

As used herein, the term "software program" means a sequence of high level language (HLL) instructions with each such instruction being interpreted by a microcode program of low level language (LLL) instructions. In turn, the low level language instructions are executed directly by digital logic circuitry in computer 10. Individual high level language instructions in software program 13 are indicated by reference numeral 14; and the low level language microcode programs are indicated by reference numeral 15 in a memory 16.

Three of the illustrated high level language instructions 14 are CALL instructions 14a, 14b, and 14c which have been modified to operate in accordance with the present invention. This modified CALL instruction identifies an activity by name, discontinues the execution of the HLL software program of which it is a part, saves sufficient information to resume execution of the discontinued program at a later time at the point of discontinuance, and initiates the execution of the named activity by passing parameters and control to it.

For example, CALL instruction 14a identifies an activity $A_x$ to which control is to be passed along with parameters j and k. Similarly, CALL instruction 14b identifies an activity $A_y$ to which control is to be passed along with a parameter 1. And CALL instruction 14c identifies another activity $A_z$ to which control is to be passed along with parameters m, n, and o.

Each of the activities $A_x$, $A_y$, and $A_z$ is either a special purpose software program (i.e., a procedure), a special purpose microcode program, or a special purpose hardware logic unit. In each case, the activity is adapted to receive parameters from the CALL instruction, operate on the received parameters in a predetermined fashion, and indicate to the CALL instruction that the operation is complete. For example, one activity may receive the names of several records as parameters from the CALL instruction, read the identified records from various storage units, and sort them in a predetermined order.

In Figure 1, activity $A_x$ is indicated by reference numeral 20 as being a special purpose procedure of HLL instructions in memory 11. Those high level language instructions are from the same language as the instructions which make up program 13. To execute activity $A_x$, the address of the beginning high level language instruction in activity $A_x$ is loaded into a program counter in computer 10; and then instructions from activity $A_x$ are read via the high level language bus 12 into computer 10 where they are interpreted by the microcode programs 15.

By comparison, activity $A_y$ is indicated by reference numeral 21 in Figure 1 as being a special purpose microcode program in memory 16. Microcode program 21 is made up of a sequence of low level language instructions which are read over a low level language bus 22 into computer 10 where they are executed directly by the computer's digital logic circuitry.

Also as is indicated by reference numeral 23, activity $A_z$ is comprised of a special purpose logic unit which is coupled via an I/O bus 24 to computer 10. When a CALL instruction in program 13 is encountered which calls activity $A_z$, computer 10 sends the parameters of the CALL instruction to unit 23 via bus 24 and then merely waits for unit 23 to return the results of the operation which the activity performs.

A depictor array 25 is also coupled to the I/O bus 24; and it contains respective depictors for each activity that is called in program 13. Thus the Figure 1 array contains three depictors 25-1, 25-2, and 25-3. By a depictor is herein meant a mechanism which links a named activity to other information which describes how the named activity can be accessed.

In one preferred embodiment, each depictor in array 25 is a content addressable hardware register that is partitioned into three parts, "a", "b". and "c". Part "a" contains the name of the activity. Part "b" identifies whether the named activity is a software program in memory 11 or a microcode program in memory 16 or a hardware logic unit on I/O bus 24. And part "c" specifies the memory address or bus address at which the activity can be accessed. To access a particular depictor, the name of an activity is sent over bus 24 to array 25; that name is compared with part "a" of the depictors until a match occurs; and parts "b" and "c" of the matching depictor are sent to computer 10.

In Figure 1, part "a" of depictor 25-1 shows that it is a depictor for activity $A_x$; part "b" shows that activity $A_x$ is implemented by HLL instructions in memory 11 as a procedure; and part "c" shows that the instructions begin at address 5000. Similarly, depictor 25-2 shows that activity $A_y$ is implemented by low level language instructions which begin at microcode address 200; and depictor 25-3 shows that activity $A_z$ is implemented by a hardware logic unit which is at I/O bus address 100.

Reference should now be made to Figure 2 which illustrates a flow chart for the portion 15a of the microcode programs 15 which is executed when a CALL instruction in program 13 is encountered. To begin, as indicated by box 30, the microcode 15a directs computer 10 to fetch the depictor that is linked to the called activity from depictor array 25. Thereafter, as indicated by boxes 31, 32, and 33, the microcode 15a directs computer 10 to examine field "b" of the fetched depictor to sense how the called activity is linked to an implementation mechanism.

If the called activity is implemented by high level language instructions in memory 11, then the microcode 15a directs computer 10 to save the present program counter and load the memory address of the called activity into the program counter. This address is contained in portion "c" of the depictor of the called activity. Thereafter, the high level language instructions of the called activity are executed until the activity goes to completion; whereupon control is returned back to the calling program by reloading the program counter with the previously stored address. All of this is indicated in the flow chart at 34a and 34b.

By comparison, if the called activity is implemented by a hardware logic unit, then the microcode 15a directs computer 10 to send the parameters of the CALL instruction to the hardware logic unit which implements the called activity. Thus when activity $A_z$ is called, processor 10 sends parameters m, n, and o to the unit 23 at address 100 on the I/O bus 24. Thereafter, computer 10 waits for the hardware unit to return the results of the operations that it performs. This is indicated in the flow chart at 35a and 35b.

Finally, if the microcode 15a detects that the called activity is performed by a special purpose microcode program, then the present microcode address counter is saved and the beginning address of the called activity in microcode memory 16 is loaded into the microcode address register. Thereafter, microcode in the called activity is executed until the called activity goes to completion; whereupon the saved microcode address is reloaded back into the microcode address register. This is indicated in the flow chart at 36a and 36b.

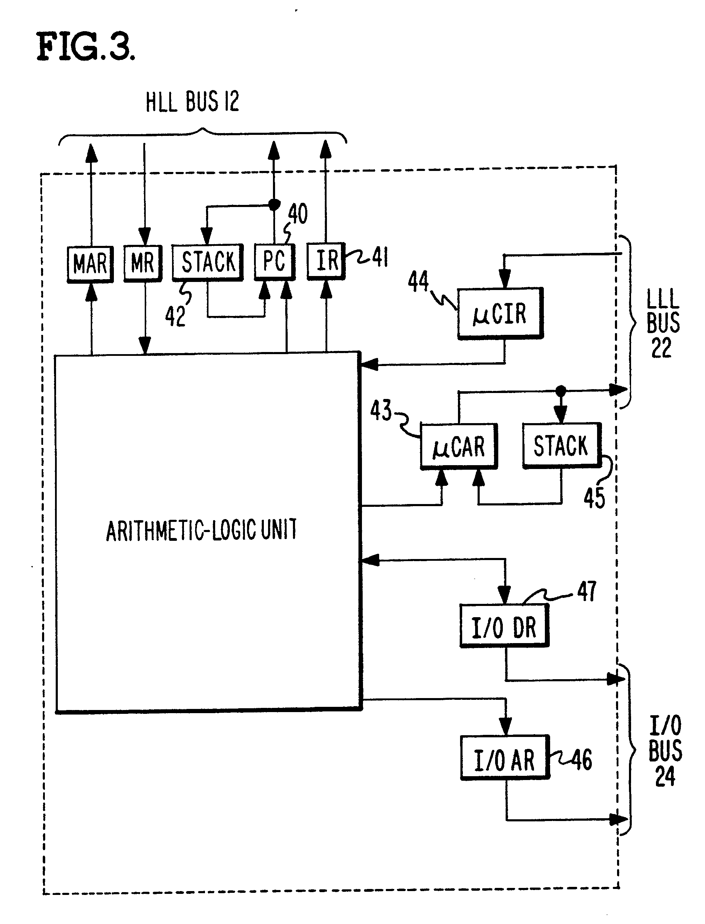

One preferred architecture for the logic circuitry in computer 10 which is adapted to achieve the above steps is illustrated in Figure 3. That architecture includes a HLL bus interface 12, a LLL bus interface 22, and an I/O bus interface 24 which respectively correspond to the buses which were previously described in conjunction with Figure 1. A program counter register 40 is provided for addressing HLL instructions on bus 12; and an instruction register 41 is provided for receiving HLL instructions from bus 12. Also, a stack 42 is provided for saving the present contents of the program counter 40 and for reloading those saved contents back into the program counter.

A microcode address register 43 is provided in the Figure 3 architecture for addressing LLL instructions on bus 23; and a microcode instruction register 44 is provided for receiving LLL instructions from bus 22. Also, another stack 45 is provided for saving the present content of microcode address register 43 and for restoring addresses back into the microcode address register 43.

An I/O bus address register 46 is provided in the Figure 3 architecture on bus 24 to transmit addresses on the bus and thereby select one of the units that are to the bus. Also, an I/O bus data register 47 is provided for sending parameters to the selected unit and for receiving data therefrom.

One feature of the above-described system of Figures 1-3 is its versatility. To have the option of implementing an activity via a high level language procedure, a low level language microcode program, or a hardware logic unit is very desirable since various speed-cost trade-offs can thereby be made.

If high speed is the primary design goal of the system, then the frequently used activities should be implemented by a microcode or hardware logic units. This is because microcode and logic circuits can perform more primitive operations than high level language instructions. Thus, they can be arranged to perform a given task more efficiently. Also, microcode and logic circuitry operates more quickly than HLL instructions.

On the other hand, if low cost is the primary design goal, then most of the activities should be implemented by high level language procedures. This is because the cost of relatively slow HLL memory space is less than the cost of relatively fast LLL microcode memory space or high speed logic circuitry.

Another feature of the above-described system is that the means by which a particular activity is implemented is very easy to change with time. For example, an activity that had previously been implemented by a high level language procedure can be implemented at a later date as a low level language program or a hardware logic unit.

Such a change is achieved by merely providing the low level language program or hardware logic unit along with a new depictor in depictor array 25. By this means, the speed of a particular system can be enhanced from time to time without changing the system's overall architecture.

The present invention may be incorporated into a multiprocessor system to improve that system's versatility and performance. One suitable multiprocessor system, for example, is described in a co-pending patent application entitled "Method of Performing a Sequence of Related Activities in Multiple Independent Digital Processors" by Christopher J. Tomlinson and Howard H. Green which was filed July 21, 1983 and assigned Serial No. _____ . All of the teachings of that application are hereby incorporated by reference.

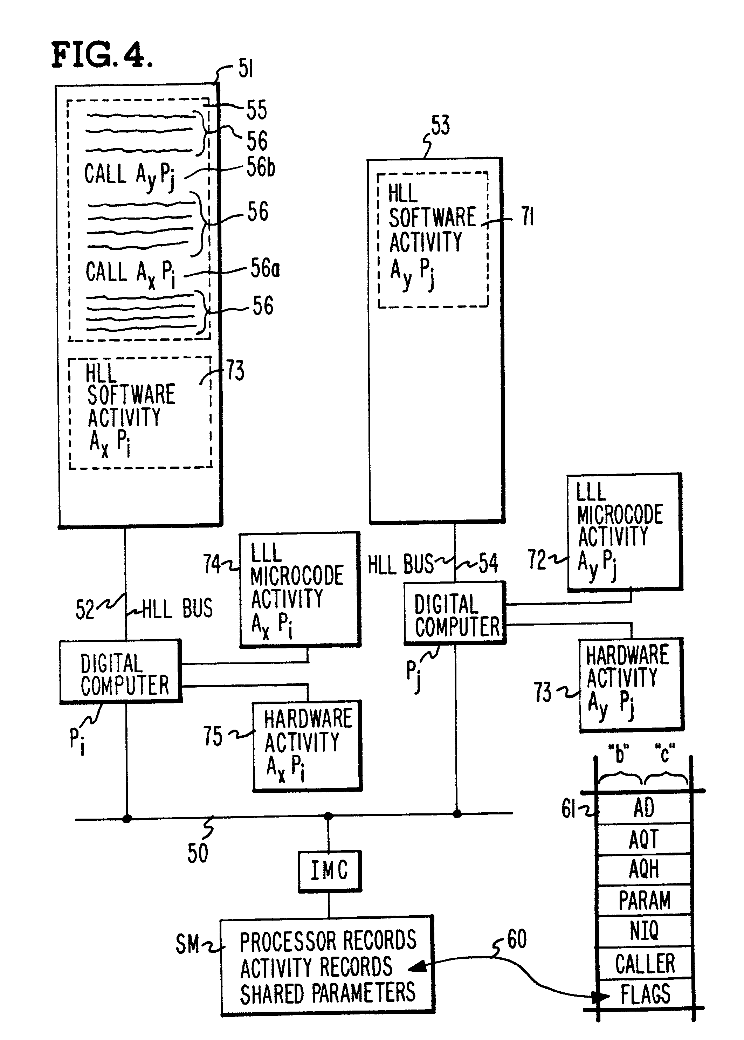

Figure 4 of the present case illustrates the above-referenced Tomlinson and Green multi processor system with modifications that incorporate the present invention. This Figure 4 system includes a pair of digital processors $P_i$ and $P_j$ which are coupled together via bus 50. Processor $P_i$ is also coupled to a memory 51 via a high level language bus 52; and processor $P_j$ is coupled to a memory 53 via a high level language bus 54.

Included in memory 51 is a program 55 which contains a sequence of high level language instructions 56. One of those instructions 56a is a CALL instruction which calls an activity $A_xP_i$ that processor $P_i$ performs; while another of those instructions 56b is a CALL instruction which calls an activity $A_yP_j$ that processor $P_j$ performs.

In operation, processor $P_i$ executes the instructions 56 until it encounters one of the CALL instructions 56a or 56b. When that occurs, processor $P_i$ interrogates an ACTIVITY RECORD 60 for the activity that is being called. That ACTIVITY RECORD is in a shared memory SM; and it is accessed via bus 50 through an intelligent memory controller IMC.

Some of the entries in each ACTIVITY RECORD 60 are illustrated in Figure 4. They include various FLAGS, a CALLER entry, an ACTIVITY QUEUE HEAD (AQH) entry, a NEXT IN QUEUE (NIQ) entry, and an ACTIVITY QUEUE TAIL (AQT) entry.

If the flags indicate that the called activity is DORMANT, then a pointer to the calling program (i.e., program 55) is placed in the caller entry; whereas if the flags indicate that the activity is ACTIVE, then a pointer to the calling activity is placed in the activity's queue. All of this is explained in greater detail in conjunction with TABLE 1 of the above-referenced co-pending application by Tomlinson and Green.

Later, when processor $P_j$ completes the execution of the activity that it was performing, it interrogates the PROCESSOR RECORDS and ACTIVITY RECORDS to determine which activity to execute next. All of the details of the actions that occur to determine which activity processor $P_j$ performs next is described in the above-referenced Tomlinson and Green application in conjunction with TABLE 2.

Now, in accordance with the present invention, each activity record also includes an activity depictor 61. Physically, each depictor 61 is a pre-written thirty-two bit word in a random access memory or a thirty-two bit register in a register array. And after processor $P_j$ selects an activity to perform, it then examines depictor 61 of the selected activity to determine how the activity is implemented and how it can be accessed.

Preferably, depictor 61 contains a portion "b" which indicates whether the corresponding activity is implemented via a high level language program, a low level language microcode program, or a hardware logic unit. Also preferably, depictor 61 contains a portion "c" which indicates how that activity can be accessed.

During its examination of depictor 61, processor $P_j$ performs all of the previously described steps of Figure 2. Thus it examines portion "b" to determine whether the selected activity is implemented by a software program 71, a firmware program 72, or a hardware logic unit 73. Then it utilizes the information in portion "c" to activate the activity as indicated at 34a-36b.

In like manner, when processor $P_i$ calls an activity which it performs, the processor then examines the depictor for that activity to determine whether it is implemented by a software program 74, a microcode program 75, or a hardware logic unit 76. Then, depending on that determination, it performs steps 34a-34b, 35a-35b, or 36a-36b of Figure 2.

Thus, the multiprocessor system of Figure 4 has both the versatility and changeability features of the single processor system of Figure 1. If high speed is the primary design goal of the Figure 4 system, then the frequently used activities should be implemented by low level language microcode programs or hardware logic units. And the performance of the multiprocessor system can be enhanced with time by substituting low level language programs or hardware logic units for various activities that previously had been implemented by high level language software programs, and by providing new activity depictors 61 in the activity's record 60 to reflect this change.

## Claims

1. A method of operating a data processing system of a type that has (1) a means (11) in which there is stored one software program (13) that contains first (14a) and second (14b or 14c) instructions which respectively call first (Ax) and second (Ay or Az) activities; and (2) a means for executing said activities; wherein to enhance the flexibility by which said activities are executed, said method is characterized by the steps of: linking said first activity via one depictor (25-1) having a first code (HLL) to another software program (20) that performs said first activity, and linking said second activity via another depictor (25-2 or 25-3) having a second code (LLL or HW) to a non-software means (21 or 23) that performs said second activity; executing said one software program until either said first or second instruction is encountered; sensing whether the activity called by said encountered instruction is linked to a depictor which has said first or second code; and executing said another software program if said sensing step detects said first code; and activating said non-software means if said sensing step detects said second code.

2. A method according to Claim 1 wherein said activating step includes executing a microcode program (21) which performs the activity called by said encountered instruction.

3. A method according to Claim 2 wherein said linking step includes writing the address of said another software program into said one depictor and writing the address of said microcode program into said another depictor.

4. A method according to Claim 1 wherein said activating step includes sending parameters to a hardware logic unit and therein performing the activity called by said encountered instruction.

5. A method according to Claim 4 wherein said linking step includes writing the bus address of said hardware logic unit into said another depictor.

6. A method according to Claim 1 wherein said sensing step is performed by executing a set of microcode commands.

7. A method according to Claim 1 and further including the step of repeating all of the steps of Claim 1 until the execution of said one software program is complete.

8. A method according to Claim 1 wherein said software program contains a third instruction which calls a third activity, and said second and third activities are linked via respective depictors (25-2,25-3) which have different codes (LLL,HW) to microcode that performs the second activity and hardware that performs the third activity.

## Revendications

1. Méthode de mise en oeuvre d'un système de traitement de données du type comportant (1) un moyen (11) qui contient un programme (13) avec une première instruction (14a) et une seconde instruction (14b ou 14c) qui appellent respectivement une première activité (Ax) et une seconde activité (Ay ou Az), et (2) un moyen pour exécuter ces activités, et pour augmenter la souplesse d'exécution de ces activités, méthode caractérisée par les étapes suivantes : on relie la première activité par l'intermédiaire d'un dépictor (25-1) ayant un premier code (HLL) à un autre programme (20) pour exécuter la première activité et on relie la seconde activité par un autre dépictor (25-2 ou 25-3) ayant un second code (LLL ou HW) à un moyen qui n'est pas un programme (21 ou 23) qui exécute cette seconde activité, on effectue un programme jusqu'à ce que l'on rencontre la première ou la seconde instruction ; on détecte si l'activité appelée par l'instruction rencontrée est liée à un dépictor qui a un premier et un second code et on exécute cet autre programme si au cours de la détection on détecte le premier code et on active le moyen sans programme si l'étape de détection détecte le second code.

2. Méthode selon la revendication 1, caractérisée en ce que l'étape d'activation comprend un programme à microcode (21) qui exécute l'activité appelée par l'instruction rencontrée.

3. Méthode selon la revendication 2, caractérisée en ce que l'étape de liaison consiste à écrire l'adresse de l'autre programme dans un dépictor et d'écrire l'adresse du programme à microcode dans cet autre dépictor.

4. Méthode selon la revendication 1, caractérisée en ce que l'étape d'activation consiste à envoyer les paramètres à une unité logique câblée et à y exécuter l'activité appelée par l'instruction rencontrée.

5. Méthode selon la revendication 4, caractérisée en ce que l'étape de liaison consiste à écrire le bus d'adresse de l'unité logique câblée dans cet autre dépictor.

6. Méthode selon la revendication 1, caractérisée en ce que l'étape de détection se fait en exécutant un jeu d'ordre en microcode.

7. Méthode selon la revendication 1 et comprenant en outre l'étape de répétition de toutes les étapes de la revendication 1 jusqu'à ce que l'exécution d'un programme soit terminée.

8. Méthode selon la revendication 1, caractérisée en ce que le programme contient une troisième instruction qui appelle une troisième activité et la seconde et la troisième activité sont liées par des dépictors respectifs (25-2, 25-3) qui ont des codes différents (LLL, HW) à microcode pour exécuter la seconde activité et un circuit câblé pour exécuter la troisième activité.

**Ansprüche**

1. Verfahren zum Betrieb eines Datenverarbeitungssystemes (1), welches Mittel (11) aufweist, in denen ein erstes Software-Programm (13) gespeichert ist, welches erste (14 a) und zweite (14 b oder 14 c) Anweisungen enthält, die zugehörige erste (Ax) und zweite (Ay oder Az) Aktivitäten aufrufen; und mit Mitteln zum Ausführen dieser Aktivitäten (2); wobei das Verfahren zur Erhöhung der Flexibilität, mit der die Aktivitäten ausgeführt werden, dadurch gekennzeichnet ist, daß die erste Aktivität über einen einen ersten Code (HLL) aufweisenden Depictor (25-1) mit einem anderen Software-Programm (20) verbunden ist, welches die erste Aktivität ausführt, und daß die zweite Aktivität über einen anderen, einen zweiten Code (LLL oder HW) aufweisenden Depictor (25-2 oder 25-3) mit einem Nicht-Software-Mittel (21 oder 23) verbunden ist, welches die zweite Aktivität ausführt; daß das eine Software-Programm ausgeführt wird bis die erste oder zweite Anweisung erreicht wird; daß überwacht wird, ob die Aktivität, die durch die aufgefundene Anweisung aufgerufen wird, mit einem Depictor verbunden wird, welcher einen ersten oder zweiten Code aufweist; daß das andere Software-Programm ausgeführt wird, wenn der Überwachungsschritt den ersten Code feststellt; und daß das Nicht-Software-Mittel aktiviert wird, wenn der Überwachungsschritt den zweiten Code feststellt.

2. Verfahren nach Anspruch 1, dadurch gekennzeichnet, daß der Aktivierungsschritt die Ausführung eines Mikrocode-Programms (21) beinhaltet, welches die durch die aufgefundene Anweisung aufgerufene Aktivität ausführt.

3. Verfahren nach Anspruch 2, dadurch gekennzeichnet, daß der Verbindungsschritt das Schreiben der Adresse des anderen Software-Programmes in den einen Depictor und das Schreiben der Adresse des Mikrocode-Programmes in den anderen Depictor umfaßt.

4. Verfahren nach Anspruch 1, dadurch gekennzeichnet, daß der Aktivierungsschritt das Senden von Parametern an eine Hardware-Logikeinheit beinhaltet, welche die von der aufgefundenen Anweisung aufgerufene Aktivität ausführt.

5. Verfahren nach Anspruch 4, dadurch gekennzeichnet, daß der Verbindungsschritt das Schreiben der Bus-Adresse der Hardware-Logikeinheit in den anderen Depictor umfaßt.

6.  Verfahren nach Anspruch 1, dadurch gekennzeichnet, daß der Überwachungsschritt durch Ausführung eines Satzes von Mikrocode-Kommandos ausgeführt wird.

7.  Verfahren nach Anspruch 1, dadurch gekennzeichnet, daß zusätzlich ein Schritt vorhanden ist, welcher alle Schritte von Anspruch 1 wiederholt, bis das eine Software-Programm vollständig ausgeführt ist.

8.  Verfahren nach Anspruch 1, dadurch gekennzeichnet, daß das Software-Programm eine dritte Anweisung enthält, welche eine dritte Aktivität aufruft, und daß die zweite und die dritte Aktivität über entsprechende Depictoren (25-2, 25-3), welche unterschiedliche Codes (LLL, HW) aufweisen, mit Mikrocode, der die zweite Aktivität ausführt, und mit Hardware, die die dritte Aktivität ausführt, verbunden sind.

# FIG.1.

HLL SOFTWARE ACTIVITY $A_x$ — 20

13

14

CALL $A_x(j,k)$ — 14a

CALL $A_y(\ell)$ — 14b

CALL $A_3(m,n,o)$ — 14c

11

MICROCODE ACTIVITY $A_y$ — 21

16

LLL MICROCODE PROGRAMS FOR HLL INSTRUCTIONS — 15

CALL MICROCODE — 15a

12 — HLL BUS

LLL BUS — 22

DIGITAL COMPUTER 10

24

I/O BUS

25

| | a | b | c |
|---|---|---|---|
| 25-1 | Ax | HLL | 5000 |
| 25-2 | Ay | LLL | 200 |
| 25-3 | A3 | HW | 100 |

23

HARDWARE ACTIVITY A3

# FIG.2.

START

FETCH DEPICTOR OF CALLED ACTIVITY — 30

HLL ACTIVITY DEPICTOR ? — 31 → YES → SAVE PRESENT PC, LOAD HLL DEPICTOR ADDRESS INTO PC — 34a

HW ACTIVITY DEPICTOR ? — 32

LLL ACTIVITY DEPICTOR ? — 33

YES

ERR

EXECUTE HLL ACTIVITY TO COMPLETION, RESTORE SAVED PC — 34b

SEND PARAMETERS TO HARDWARE UNIT ALL I/O BUS ADDRESS IN DEPICTOR — 35a

SAVE PRESENT $\mu$CAR, LOAD LLL DEPICTOR ADDRESS INTO $\mu$CAR — 36a

WAIT FOR HARDWARE UNIT TO RETURN RESULTS OF OPERATIONS IT PERFORMS — 35a

EXECUTE LLL ACTIVITY TO COMPLETION. RESTORE SAVED $\mu$CAR — 36b

# FIG.3.

# FIG.4.